# EUROPEAN PATENT SPECIFICATION

(11) **EP 4 317 564 B1**
(45) Date of publication and mention of the grant of the patent: **07.10.2026**
(21) Application number: 22845820.4
(22) Date of filing: 12.07.2022
(51) Int. Cl.: D04H 1/4242, B29B 15/08, B32B 5/26, B32B 5/28, B32B 7/03, D04H 1/74, B29K 105/14

(54) **CARBON FIBER NONWOVEN FABRIC SHEET, METHOD FOR PRODUCING SAME AND CARBON FIBER REINFORCED RESIN MOLDED BODY USING SAME**
KOHLEFASERVLIESSTOFF, VERFAHREN ZUR HERSTELLUNG DAVON UND KOHLENSTOFFFASERVERSTÄRKTER HARZFORMKÖRPER DAMIT
FEUILLE DE NON-TISSÉ DE FIBRES DE CARBONE, PROCÉDÉ DE PRODUCTION DE CELLE-CI, ET CORPS MOULÉ EN RÉSINE RENFORCÉE DE FIBRES DE CARBONE UTILISANT CELLE-CI

(30) Priority: 19.07.2021 JP 2021118937
(43) Date of publication of application: 07.02.2024
(73) Proprietor: The Japan Wool Textile Co., Ltd., Kobe-shi, Hyogo 650-0037 (JP)
(72) Inventor: FUKUDA, Yasuhiro, Kakogawa-shi, Hyogo 675-0053 (JP); MIYAMOTO, Kouki, Kakogawa-shi, Hyogo 675-0053 (JP); ISE, Tomokazu, Kakogawa-shi, Hyogo 675-0053 (JP); SUGIMOTO, Sunao, Chofu-shi, Tokyo 182-8522 (JP); HIGASHIDE, Masumi, Chofu-shi, Tokyo 182-8522 (JP)
(74) Representative: Dehns
(86) International application number: PCT/JP2022/027418
(87) International publication number: WO 2023/002886

(56) References cited:
- WO-A1-2019/244994
- WO-A1-2021/195714
- WO-A1-2022/075265
- JP-A- 2008 254 425
- JP-A- 2016 151 081
- JP-A- 2016 151 081
- JP-A- H08 312 699
- JP-U- H04 530
- US-A1- 2013 210 298

## Description

### Technical Field

The present invention relates to a carbon fiber nonwoven fabric sheet, a method for producing the same, and a carbon fiber reinforced resin molded body using the same.

### Background Art

Because a carbon fiber reinforced plastic (CFRP), which is constituted of carbon fibers and a matrix resin, is light in weight, and has high specific strength, high specific modulus, good mechanical properties, high weather resistance, and high chemical resistance, such CFRP is used and has been studied for various applications such as aircraft, automobiles, tanks, concrete reinforcement materials, and sports applications. When CFRP is produced, offcuts are generated by cutting carbon fiber sheets and the like, and effective utilization is an issue. Further, effective utilization (recycling) of carbon fibers is also an issue with disposal of a CFRP molded body.

Examples of a method for extracting carbon fibers from waste CFRP include a calcination method and a dissolution method, and a dissolution method is proposed in Patent Document 1. The dissolution method is a method for dissolving a resin, and it is possible to obtain high-quality recycled carbon fibers. However, the carbon fibers obtained after dissolution treatment are discontinuous fibers and are entangled in a cotton-like state, which makes it difficult to directly recycle the carbon fibers into CFRP. Patent Documents 2 to 4 propose opening of fibers using a dry method (carding) as a method for regenerating recycled carbon fibers into CFRP. The applicants of the present application also propose opening of fibers using a carding machine in Patent Document 5.

### Prior Art Documents

### Patent Documents

[Patent Document 1] JP 2007-297641A
[Patent Document 2] JP 2012-086682X
[Patent Document 3] JP 2013-519546A
[Patent Document 4] JP 2014-025175A
[Patent Document 5] JP 2016-151081A

### Disclosure of Invention

### Problem to be Solved by the Invention

However, with a conventional technique, there is a problem in producing an elongated carbon fiber nonwoven fabric sheet for obtaining a molded body using discontinuous carbon fibers that are highly oriented in its lengthwise direction, similar to a uniaxial sheet constituted of a continuous carbon fiber sheet.

In order to resolve the conventional issues, the present invention provides a carbon fiber nonwoven fabric sheet that can be used in the same manner as that for a uniaxial sheet constituted of a continuous carbon fiber sheet, a method for producing the same, and a carbon fiber reinforced resin molded body using the same.

### Means for Solving Problem

A carbon fiber nonwoven fabric sheet according to the present invention is a carbon fiber nonwoven fabric sheet containing discontinuous carbon fibers. The carbon fiber nonwoven fabric sheet is an elongated parallel web in which two or more rectangular fiber webs having carbon fibers oriented substantially in one direction are stacked in the same direction with end portions of the rectangular fiber webs shifted from each other, and the carbon fibers that constitute the elongated parallel web are arranged in one direction.

A method for producing a carbon fiber nonwoven fabric sheet according to the present invention is a method for producing the carbon fiber nonwoven fabric sheet, the method including: forming a fiber web by opening carbon fibers containing discontinuous carbon fibers using a carding machine, and orienting the carbon fibers substantially in one direction, and forming rectangular fiber webs by cutting the fiber web in a width direction or an oblique direction; forming an elongated parallel web by stacking the rectangular fiber webs on each other while end portions of the rectangular fiber webs are shifted from each other and the carbon fibers are arranged in one direction; and obtaining a carbon fiber nonwoven fabric sheet by cutting both ends of the elongated parallel web.

A carbon fiber reinforced resin molded body according to the present invention contains the carbon fiber nonwoven fabric sheet and a matrix resin.

### Effects of the Invention

The present invention relates to a carbon fiber nonwoven fabric sheet containing discontinuous carbon fibers. Because the carbon fiber nonwoven fabric sheet is an elongated parallel web in which two or more rectangular fiber webs having carbon fibers oriented substantially in one direction are stacked in the same direction with end portions of the rectangular fiber webs shifted from each other, and the carbon fibers that constitute the elongated parallel web are arranged in one direction, it is possible to obtain a molded body that is similar to a continuous carbon fiber sheet, using discontinuous carbon fibers. That is, a plurality of rectangular fiber webs unidirectionally oriented are stacked on each other with end portions of the rectangular fiber webs shifted from each other to form an elongated parallel web, and both ends of the parallel web are cut to form a carbon fiber nonwoven fabric sheet, which can thus be used in the same manner as that for a uniaxial sheet constituted of a continuous carbon fiber sheet. The carbon fiber nonwoven fabric sheet can be efficiently and productively produced using the production method according to the present invention. Because the carbon fiber reinforced resin molded body according to the present invention contains the carbon fiber nonwoven fabric sheet and a matrix resin, the molded body has high tensile strength in the direction in which the carbon fibers are oriented.

### Brief Description of Drawings

[FIG. 1] FIG. 1 is a schematic cross-sectional view of a carding machine according to one embodiment of the present invention.
[FIG. 2] FIG. 2 is a schematic diagram illustrating how an elongated parallel web is formed by stacking rectangular fiber webs obtained using the carding machine while their end portions are shifted from each other.
[FIG. 3] FIG. 3 is a schematic perspective view of a carbon fiber nonwoven fabric sheet according to one embodiment of the present invention.
[FIG. 4] FIG. 4 is a photograph of a surface of the fiber web.
[FIG. 5] FIG. 5 is an enlarged photograph of the surface of the fiber web.
[FIG. 6] FIG. 6 is a photograph of the surface of a stacked portion of the rectangular fiber webs with their end portions shifted from each other.
[FIG. 7] FIG. 7 is a schematic cross-sectional view showing a process for producing a carbon fiber nonwoven fabric prepreg according to one embodiment of the present invention.

### Description of the Invention

A carbon fiber nonwoven fabric sheet according to the present invention is a carbon fiber nonwoven fabric sheet containing discontinuous carbon fibers. As a result, when a carbon fiber reinforced resin molded body is formed, it is possible to obtain the carbon fiber reinforced resin molded body having high strength in the direction in which the carbon fibers are oriented, and having high quality.

The carbon fiber nonwoven fabric sheet may be made by cutting a unidirectionally oriented fiber web in a width direction or an oblique direction to form a rectangular fiber web, and stacking a plurality of the rectangular fiber webs while end portions thereof are shifted from each other to form an elongated parallel web, and then the parallel web may be cut at both ends of the parallel web or may be cut to a predetermined length as needed. The term "rectangle" used in this embodiment does not need to be a rectangle whose four corners have 90 degrees, and includes a trapezoid and a parallelogram. The fiber web is opened on an opening device of the carding machine, and carbon fibers are oriented substantially in one direction. The opening device is preferably a cylinder or a belt conveyor. A large number of metal needles are provided on the cylinder or belt conveyor, and the carbon fibers are opened, oriented substantially in one direction, and stripped between the large number of metal needles. As a result, a unidirectionally oriented fiber web can be obtained. Various widths and diameters or lengths of the cylinder or belt conveyor can be selected, and a width and a diameter or a length suitable for the production volume are selected and used.

The rectangular fiber webs are stacked on each other with their end portions shifted from each other, to form an elongated parallel web in which the carbon fibres that constitute the elongated parallel web are arranged in one direction. The rectangular fiber webs have the same width. Therefore, when the fiber webs are stacked on each other while the end portions of the fiber webs are shifted from each other by a predetermined length, it is possible to obtain an elongated parallel web having the same number of stacked fiber webs. The elongated parallel web may have any number of stacked fiber webs and any length. A carbon fiber nonwoven fabric sheet is obtained by cutting both ends of the elongated parallel web. The carbon fiber nonwoven fabric sheet can be used in a manner similar to that for a uniaxial sheet constituted of a continuous carbon fiber sheet. That is, the uniaxial sheet constituted of a continuous carbon fiber sheet can be used like a piece of unidirectional tape (UD tape), and the uniaxial sheet is molded with a resin through a hand lay-up process, a vacuum-assisted resin transfer molding process, (VaRTM process), a resin transfer molding process (RTM process), a resin injection process (RIM process), a pressmolding process, an autoclave process, a sheet winding process, a pultrusion process, a spray-up process, or the like, and the carbon fiber nonwoven fabric sheet of the present invention can also be used in the same manner. When an epoxy resin is used as a matrix resin as an example, the carbon fiber nonwoven fabric sheet can be obtained. The tensile strength of the molded body in the direction in which carbon fibers are oriented is 340 MPa or more, which is a level comparable to the 0.2% proof stress, which is the practical strength of aluminum alloy A2024 (super duralumin).

The mass per unit area of the carbon fiber nonwoven fabric sheet (may also be referred to simply as "mass" hereinafter) is 1 to 1000 g/m², more preferably 5 to 500 g/m², and even more preferably 10 to 300 g/m². When the mass per unit area of the carbon fiber nonwoven fabric sheet is within the above range, the carbon fiber nonwoven fabric sheet has favorable handleability and is convenient for molding a carbon fiber reinforced resin. When the mass per unit area of the carbon fiber nonwoven fabric sheet is within the above range, it is possible to obtain a carbon fiber reinforced resin molded body with high strength.

The mass per unit area of the fiber web is preferably 0.1 to 100 g/m², more preferably 0.5 to 50 g/m², and even more preferably 1 to 30 g/m². When the mass per unit area of the fiber web is within the above range, the fiber web has favorable handleability and is convenient for molding a carbon fiber reinforced resin.

The number of stacked rectangular fiber webs is preferably 2 to 100, more preferably 5 to 50, and even more preferably 10 to 30. When the number of stacked rectangular fiber webs is within the above-mentioned range, it is also possible to increase the mass per unit area, and obtain a carbon fiber reinforced resin molded body with high strength.

End portions of the rectangular fiber webs are preferably stacked while being each shifted by 1 to 1000 mm, more preferably 5 to 500 mm, and even more preferably 10 to 300 mm. With the above shift amount, a uniform elongated parallel web can be obtained. The "elongated shape" used in this embodiment has a theoretically infinite length, but in practical has a length of about 0.5 to 25 m.

The wording "fibers are oriented substantially in one direction" or "fibers are unidirectionally oriented" used in the present invention means that 50% by mass or more of the fibers are oriented at an angle within ± 10 degrees. Therefore, 50% by mass or more of the carbon fibers that constitute the rectangular fiber webs are oriented at an angle within ± 10 degrees, 60% by mass or more thereof are preferably oriented at an angle within ± 10 degrees, and 70% by mass or more thereof are more preferably oriented at an angle within ± 10 degrees. When the above range is realized, it is possible to obtain a molded body having high fiber orientation, high strength, and high quality.

The average density of the rectangular fiber webs is preferably 0.01 to 0.40 g/cm³, more preferably 0.02 to 0.20 g/cm³, and even more preferably 0.03 to 0.15 g/cm³ when a load of 500 Pa is applied. When the average density is within the above range, the fiber web has favorable handleability and is convenient for molding a carbon fiber reinforced resin.

The carbon fibers that constitute the rectangular fiber webs can have any fiber length, and the fiber length thereof is in the range of preferably 1 to 300 mm, more preferably 5 to 200 mm, and even more preferably 10 to 150 mm. When the fiber length is within the above range, the carbon fibers have no problem in quality, have favorable handleability, and are convenient for molding a carbon fiber reinforced resin.

It is preferable that the rectangular fiber webs each have a length of 30 to 5000 mm in the direction in which the carbon fibers are oriented, and each have a length of 20 to 3000 mm in a direction orthogonal to the direction in which the carbon fibers are oriented. When the above lengths are within the above ranges, the fiber web has no problem in quality, have favorable handleability, and are convenient for molding a carbon fiber reinforced resin.

The carbon fibers that constitute the carbon fiber nonwoven fabric sheet are preferably recycled carbon fibers, but it is possible to use any carbon fibers such as carbon fibers obtained by cutting new carbon fibers, and offcuts generated by cutting a carbon fiber sheet during production of CFRP, for example. A raw material of the carbon fibers may be any material such as polyacrylonitrile (PAN)-based material or pitch-based material. Further, the carbon fiber nonwoven fabric sheet according to the present invention can also be used by stacking a plurality of the carbon fiber nonwoven fabric sheets, or by stacking carbon fiber sheets (e.g., continuous fiber sheets, carbon fiber fabrics, or the like) produced using other methods.

The carbon fiber nonwoven fabric sheet according to the present invention may be mixed with fibers other than carbon fibers. The amount of the discontinuous carbon fibers is preferably 10% by mass to 100% by mass and the amount of fibers other than the carbon fibers is preferably 0% by mass to 90% by mass, the amount of discontinuous carbon fibers is more preferably 20% by mass to 100% by mass and the amount of fibers other than the carbon fibers is more preferably 0% by mass to 80% by mass, and the amount of discontinuous carbon fibers is even more preferably 50% by mass to 100% by mass and the amount of fibers other than the carbon fibers is even more preferably 0% by mass to 50% by mass, with respect to the amount of the carbon fiber nonwoven fabric sheet. It is possible to use, as fibers other than the carbon fibers, thermoplastic fibers (polyamide, polypropylene, PPS, and the like) that improve handling properties before molding, in addition to high-strength and highly elastic organic fibers, which can improve physical properties after molding, (aramid (including para-based and meta-based) fibers, polyarylate fibers, poly(p-phenylene benzobisoxazole) (PBO) fibers, poly(p-phenylene benzobisthiazole) (PBZT) fibers, high molecular weight polyethylene fibers, polyetheretherketone fibers, polyvinyl alcohol fibers, and the like). Also, fibers other than the carbon fibers are not limited to one type, and fibers of two or more types may be mixed.

Next, a method for producing a carbon fiber nonwoven fabric sheet according to the present invention will be described.

### (1) Fiber web forming process

A fiber web is formed by opening fibers containing discontinuous carbon fibers using a carding machine, and orienting the carbon fibers substantially in one direction. A sizing agent may be added as needed. If fibers other than carbon fibers are added, the fibers other than the carbon fibers are added and mixed in this process.

### (2) First cutting process

Because the elongated fiber web can be obtained, a rectangular fiber web is formed by cutting the elongated fiber web in the width direction or oblique direction. There is no particular limitation on a method for cutting the fiber web in the width direction or oblique direction, but the fiber web may be cut using a cutter moving at the same speed, for example. Alternatively, it is possible to use a method for cutting an elongated fiber web allowed to stand still. A rectangular fiber web is obtained in this manner.

### (3) Stacking process

An elongated parallel web is formed by stacking the rectangular fiber webs on each other while end portions of the rectangular fiber webs are shifted from each other.

### (4) Second cutting process

The carbon fiber nonwoven fabric sheet according to the present invention is obtained by cutting both ends of the elongated parallel web. The term "both ends" used in this embodiment refer to a non-uniform stacked portion of a leading end portion and a rear end portion. The elongated parallel web may be cut to a predetermined length as needed.

A carbon fiber nonwoven fabric sheet constituted of the elongated parallel web according to the present invention may be impregnated with a resin to obtain a prepreg. A dry method can be adopted for resin impregnation as an example. The carbon fiber nonwoven fabric sheet is sandwiched between resin sheets and hot-pressed, for example. As a result, it is possible to obtain a carbon fiber nonwoven fabric prepreg in which a carbon fiber nonwoven fabric sheet is impregnated with the resin or integrated with the resin in a melted and solidified state. Furthermore, when the carbon fiber nonwoven fabric sheet is sandwiched between resin sheets, a sizing agent may be applied, or a plurality of carbon fiber nonwoven fabric sheets may be stacked on each other.

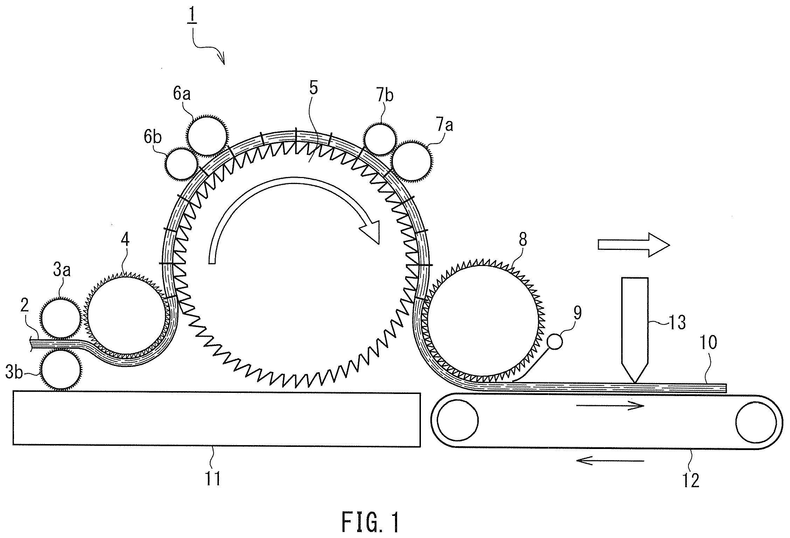

The following description refers to the drawings. The same reference numerals indicate the same items in the following drawings. FIG. 1 is a schematic cross-sectional view of a carding machine 1 according to one embodiment of the present invention. In the carding machine 1, discontinuous carbon fibers 2 are supplied from feed rollers 3a and 3b, pass over a take-in roller 4, are opened through cooperation of a cylinder 5 and workers 6a and 7a and strippers 6b and 7b, pass over a doffer 8, and are stripped by a vibrating comb 9. A fiber web is then collected therefrom. Reference numeral 11 indicates a base. Discontinuous carbon fibers of the fiber web are opened and arranged in one direction, and thus the fiber web is elongated. The fiber web is collected from a discharge belt 12. At this time, as an example, the fiber web is cut in the width direction with a cutter 13 moving at the same speed as that of the fiber web, and the fiber web is collected as a rectangular fiber web 10.

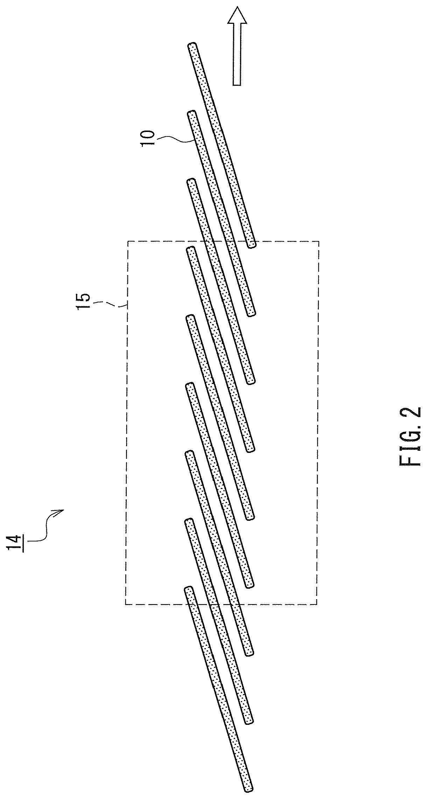

FIG. 2 is a schematic diagram illustrating how an elongated parallel web 14 is formed by stacking rectangular fiber webs 10 obtained using the carding machine while the end portions of the fiber webs 10 are shifted from each other. A carbon fiber nonwoven fabric sheet 15 is obtained by cutting the elongated parallel web 14 to a predetermined length. The carbon fiber nonwoven fabric sheet 15 has a stable mass per unit area, and even when a large number of carbon fiber nonwoven fabric sheets 15 are produced, the carbon fiber nonwoven fabric sheets 15 have a substantially uniform mass. Both ends thereof may be cut, and the cut ends may be supplied to the carding machine again to form the carbon fiber nonwoven fabric sheet 15. The arrow indicates a traveling direction.

For reference, a cross lapper stacking method is a method in which the web is shaken off perpendicularly to the traveling direction (lengthwise direction) of a nonwoven fabric sheet to produce a multiple-layer web. This does not produce an elongated nonwoven fabric sheet in which the fibers are highly oriented in the traveling direction (lengthwise direction) of the nonwoven fabric sheet.

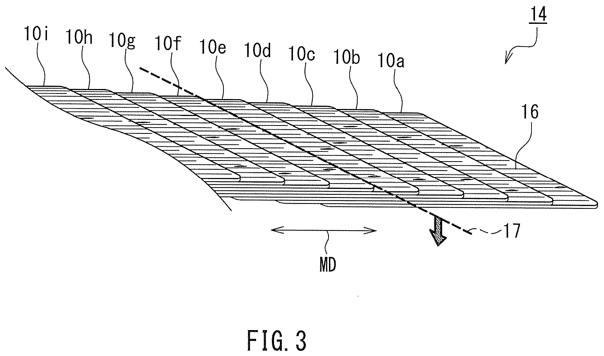

FIG. 3 is a schematic perspective view of an elongated parallel web 14 according to one embodiment of the present invention. The carbon fibers 16 that constitute the elongated parallel web 14 are arranged in one direction. Rectangular fiber webs 10a to 10i · · · are stacked on each other with end portions of the fiber webs 10a to 10i · · · shifted from each other. Rectangular fiber webs including the rectangular fiber web 10f on the left side (the left side of a cutting line 17 indicated by the arrow) form a carbon fiber nonwoven fabric sheet with a uniform number of stacked fiber webs. The carbon fiber nonwoven fabric sheet includes six layers in this example. An arrow MD indicates a lengthwise direction (MD) of the carbon fiber nonwoven fabric sheet.

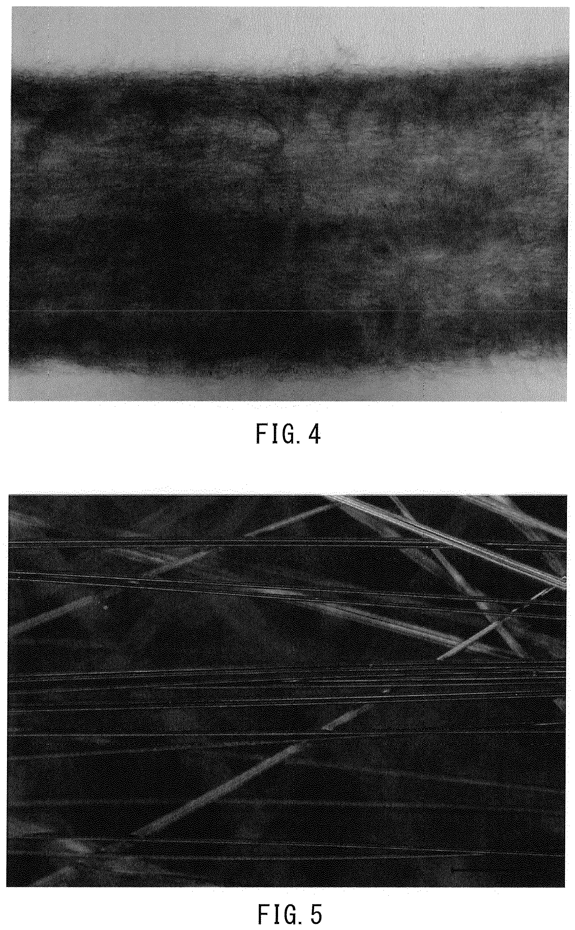

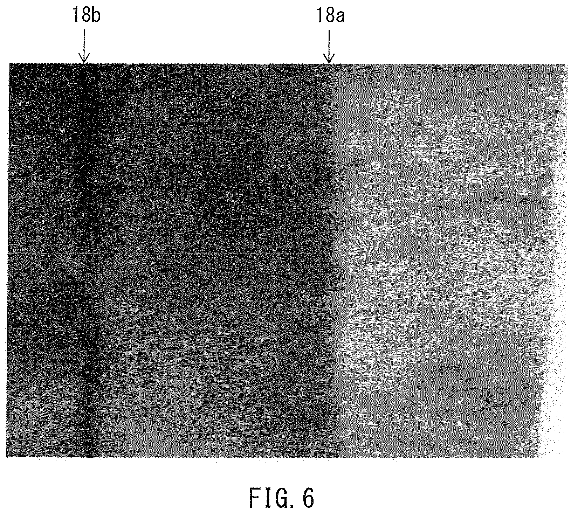

FIG. 4 is a photograph of the surface of the fiber web according to one embodiment of the present invention, FIG. 5 is an enlarged photograph of the surface of the fiber web, and FIG. 6 is a photograph of the surface of rectangular fiber webs with end portions thereof shifted from each other. Reference numerals 18a and 18b indicate stacked portions. The number of stacked fiber webs is one on the right, two in the middle, and three on the left.

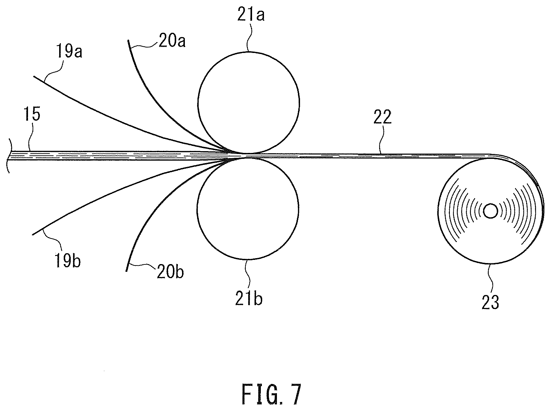

FIG. 7 is a schematic cross-sectional view showing a process for producing a carbon fiber nonwoven fabric prepreg 22 constituted of the elongated parallel web according to one embodiment of the present invention. Resin sheets 19a and 19b are respectively attached to both surfaces of the carbon fiber nonwoven fabric sheet 15, and release sheets 20a and 20b are respectively attached thereto from the outside thereof. The resulting sheet stack is hot-pressed by heat press rollers 21a and 21b to reduce the viscosity of the resin, and the resin is integrated with a carbon fiber group constituting the carbon fiber nonwoven fabric sheet 15. The obtained carbon fiber nonwoven fabric prepreg 22 has favorable handleability, and is formed into a roll-up body 23.

### Examples

Hereinafter, the present invention will be more specifically described using Examples. Note that the present invention is not limited to the Examples below.

### Tensile testing of testing pieces

The tensile strength of CFRP was measured using an Instron universal testing machine provided with a load cell of 100 kN, at a tensile speed of 1.0 mm/sec, with reference to ASTM D3039 (2017). The tensile strength in the fiber orientation direction was measured as tensile strength.

### Example 1

Carbon fibers (manufactured by Toray Industries, Inc., trade name "T800S", fiber length was 80 mm) recycled from fiber tow waste using a dissolution method were introduced into a wire carding machine, and thus a fiber web with a width of 30 cm was obtained. The obtained fiber web had a mass of 2.2 g/m², and was cut in the width direction at a length of 50 cm. The rectangular fiber web had an average thickness of 0.086 mm when a load of 500 Pa was applied. Thirty two rectangular fiber webs were stacked on each other with their end portions shifted by 3.1 cm, and the resulting stack was cut in the width direction at 46.5 cm from the leading end of the stack in the lengthwise direction and at 46.5 cm from the other end to cut off the portions with insufficient stacking, and thus a rectangular carbon fiber nonwoven fabric sheet having 16 stacked fiber webs and having a length of 52.7 cm, a width of 35 cm, and a mass of 35 g/m² was obtained. Microscopic images of the carbon fibers that constitute the carbon fiber nonwoven fabric sheet were observed, revealing that 50% by mass or more of the carbon fibers were oriented at angles within ±10 degrees. A base member was produced by trimming the obtained carbon fiber nonwoven fabric sheet to a 350 mm-square, and applying a sizing agent (average 6 wt%), and drying the carbon fiber nonwoven fabric sheet. Ten base members were aligned and stacked such that the fibers had the same fiber direction, while the base members were being impregnated with an epoxy resin (Nagase ChemteX XN6809). The stacked base members were bagged and introduced into an autoclave, and heated at 80°C for 16 hours and heated at 120°C for 2 hours under a pressure of 0.5 MPa, to form a mother plate of a carbon fiber reinforced resin molded body. A test piece having a length of 230 mm, a width of 25 mm, a thickness of 1.7 mm, and a density of 1.29 g/cm³, and a fiber volume content of about 13% was cut from the mother plate, using the direction in which the fibers were oriented as the length.

### Example 2

Carbon fibers with a fiber length range were carbon fibers (manufactured by Toray Industries, Inc., trade name "T800S") recycled from prepreg waste using a dissolution method. Fibers having a fiber length of less than 80 mm accounted for one-third of all of the carbon fibers, and fibers having a fiber length of 80 mm accounted for two-thirds of all of the carbon fibers. A web was produced in the same manner as in Example 1 to obtain a carbon fiber nonwoven fabric sheet having a mass of 39.3 g/m², and eight carbon fiber nonwoven fabric sheets were stacked on each other and formed into a carbon fiber reinforced resin molded body, thus preparing a test piece. The test piece had a length of 230 mm, a width of 25 mm, a thickness of 1.3 mm, and a density of 1.30 g/cm³, and a fiber volume content of about 14%.

### Example 3

A carbon fiber nonwoven fabric sheet was produced using the same method as in Example 1, using a mixture obtained by pre-mixing carbon fibers (manufactured by Toray Industries, Inc., trade name "T800S", fiber length was 80 mm) recycled using a dissolution method and polyamide 6 fibers (manufactured by Toray Industries, Inc., fineness was 2.2 decitex, and fiber length was 51 mm) so as to realize 97% by mass of the carbon fibers / 3% by mass of the polyamide 6 fibers. Microscopic images of the carbon fibers constituting the obtained nonwoven fabric sheet were observed, revealing that 50% by mass or more of the carbon fibers were oriented in the lengthwise direction at an angle within ±10 degrees. A resin molded body was produced using the nonwoven fabric sheet using the same method as in Example 1, a test piece having a length of 230 mm, a width of 25 mm, a thickness of 1.7 mm, a density of 1.30 g/cm³, and a fiber volume content of 15% was cut from the resin molded body, and physical properties of the test piece were measured.

### Example 4

A carbon fiber nonwoven fabric sheet was produced using the same method as in Example 1, using a mixture obtained by pre-mixing carbon fibers (manufactured by Toray Industries, Inc., trade name "T800S", fiber length was 50 mm) recycled from a resin molded body using a calcination method and polyamide 6 fibers (manufactured by Toray Industries, Inc., fineness was 2.2 decitex, and fiber length was 51 mm) so as to realize 40% by mass of the carbon fibers / 60% by mass of the polyamide 6 fibers. Microscopic images of the carbon fibers constituting the obtained nonwoven fabric sheet were observed, revealing that 50% by mass or more of the carbon fibers were oriented in the lengthwise direction at an angle within ±10 degrees. The nonwoven fabric sheet was cut to a test piece having a width of 100 mm and a length of 260 mm, the test piece was hot-pressed at a temperature of 240°C for 10 minutes under a pressure of 3.5 MPa to obtain a molded body having a thickness of 2.2 mm, a density of 1.28 g/cm³, and a carbon fiber volume content of 30%. A plurality of test pieces having a width of 25 mm and a length of 230 mm were cut out from the molded body, and physical properties thereof were measured using an Instron universal testing machine.

The above conditions and results are collectively shown in Table 1.

**Table 1**

| | Web mass (g/m²) | Number of stacked layers | Mass after stacking (g/m²) | FRP Vf*¹ (vol. %) | Calculated density (g/cm³) | Thickness (mm) | Tensile strength (MPa) |
|---|---|---|---|---|---|---|---|
| Ex. 1 | 35.0 | 10 | 350 | 13 | 1.29 | 1.7 | 384 |
| Ex. 2 | 39.3 | 8 | 314 | 14 | 1.29 | 1.3 | 341 |
| Ex. 3 | 36.2 | 10 | 362 | 15 | 1.30 | 1.8 | 428 |
| Ex. 4 | 241 | 12 | 2892 | 35 | 1.28 | 2.2 | 466 |

| | | | | | | | |
|---|---|---|---|---|---|---|---|
| (note*1) FRP Vf indicates volume % of fibers of the carbon fiber reinforced resin molded body. | | | | | | | |

As is clear from Table 1, because the carbon fiber nonwoven fabric sheet according to the present invention was constituted of an elongated parallel web, a molded body that can be used in the same manner as a uniaxial sheet constituted of a continuous carbon fiber sheet was obtained. The tensile strength of the molded bodies of Examples 1 to 4 was 340 MPa or more, which was a level comparable to the 0.2% proof stress, which is the practical strength of aluminum alloy A2024 (super duralumin).

### Industrial Applicability

The carbon fibers according to the present invention are preferably recycled carbon fibers from the viewpoint of effective utilization of resources. However, it is possible to use any carbon fibers such as carbon fibers obtained by cutting new carbon fibers, and offcuts generated by cutting a carbon fiber sheet during production of CFRP, for example. In particular, it is expected that a large amount of waste CFRP will be generated as waste materials from aircraft, automobiles, and the like in the future. Because carbon fibers extracted from the waste CFRP are entangled with each other, the present invention that can improve the openability and orientation of such entangled carbon fibers is applicable to a wide range of fields. The present invention is useful for automobiles, sporting goods, nursing care products, conductive electric/electronic components, electromagnetic shielding materials, and the like as applications.

### Description of Reference Numerals

- 1: Carding machine
- 2: Discontinuous carbon fiber
- 3a, 3b: Feed roller
- 4: Take-in roller
- 5: Cylinder
- 6a, 7a: Worker
- 6b, 7b: Stripper
- 8: Doffer
- 9: Vibrating comb
- 10, 10a-10i: Rectangular fiber web
- 11: Base
- 12: Discharge belt
- 13: Cutter
- 14: Elongated parallel web
- 15: Carbon fiber nonwoven fabric sheet
- 16: Carbon fibers that constitute fiber web
- 17: Cutting line
- 18a, 18b: Stacked portion
- 19a, 19b: Resin sheet
- 20a, 20b: Release sheet
- 21a, 21b: Heat press roller
- 22: Carbon fiber nonwoven fabric prepreg
- 23: Roll-up body

## Claims

1. A carbon fiber nonwoven fabric sheet comprising discontinuous carbon fibers,
wherein the carbon fiber nonwoven fabric sheet is an elongated parallel web in which two or more rectangular fiber webs having carbon fibers oriented substantially in one direction are stacked in the same direction with end portions of the rectangular fiber webs shifted from each other, and
the carbon fibers that constitute the elongated parallel web are arranged in one direction,
and wherein by "carbon fibers oriented substantially in one direction" is meant that 50% by mass or more of the carbon fibers are oriented at an angle within ± 10 degrees.

2. The carbon fiber nonwoven fabric sheet according to claim 1,
wherein the carbon fiber nonwoven fabric sheet contains the discontinuous carbon fibers in an amount of 10% by mass to 100% by mass, and fibers other than the carbon fibers in an amount of 0% by mass to 90% by mass, with respect to the amount of the carbon fiber nonwoven fabric sheet.

3. The carbon fiber nonwoven fabric sheet according to claim 1 or 2,
wherein the mass per unit area of the carbon fiber nonwoven fabric sheet is 1 to 1000 g/m².

4. The carbon fiber nonwoven fabric sheet according to claim 1 or 2,
wherein the number of stacked rectangular fiber webs is 2 to 100.

5. The carbon fiber nonwoven fabric sheet according to claim 1 or 2,
wherein end portions of the rectangular fiber webs are stacked while being each shifted by 1 to 1000 mm.

6. The carbon fiber nonwoven fabric sheet according to claim 1 or 2,
wherein the rectangular fiber webs have an average density of 0.01 to 0.40 g/cm³ when a load of 500 Pa is applied.

7. The carbon fiber nonwoven fabric sheet according to claim 1 or 2,
wherein the carbon fibers that constitute the rectangular fiber webs have a fiber length in the range of 1 to 300 mm.

8. The carbon fiber nonwoven fabric sheet according to claim 1 or 2,
wherein the rectangular fiber webs each have a length of 30 to 5000 mm in a direction in which the carbon fibers are oriented, and each have a length of 20 to 3000 mm in a direction orthogonal to the direction in which the carbon fibers are oriented.

9. The carbon fiber nonwoven fabric sheet according to claim 1 or 2,
wherein the carbon fibers that constitute the carbon fiber nonwoven fabric sheet contain recycled carbon fibers.

10. A method for producing the carbon fiber nonwoven fabric sheet according to any one of claims 1 to 9, comprising:
forming a fiber web by opening fibers containing discontinuous carbon fibers using a carding machine, and orienting the carbon fibers substantially in one direction, and forming rectangular fiber webs by cutting the fiber web in a width direction or an oblique direction;
forming an elongated parallel web by stacking the rectangular fiber webs on each other while end portions of the rectangular fiber webs are shifted from each other and the carbon fibers are arranged in one direction; and
obtaining a carbon fiber nonwoven fabric sheet by cutting both ends of the elongated parallel web,
and wherein by "orienting the carbon fibers substantially in one direction" is meant orienting 50% by mass or more of the carbon fibers at an angle within ± 10 degrees.

11. A carbon fiber reinforced resin molded body comprising:
a carbon fiber nonwoven fabric sheet; and
a matrix resin,
wherein the carbon fiber nonwoven fabric sheet is the carbon fiber nonwoven fabric sheet according to any one of claims 1 to 9.

12. The carbon fiber reinforced resin molded body according to claim 11,
wherein the carbon fiber reinforced resin molded body has a tensile strength of 340 MPa or more in the direction in which the carbon fibers are oriented.

13. Use of the carbon fiber nonwoven fabric sheet according to any one of claims 1 to 9 in an automobile, a sporting good, a nursing care product, a conductive electric/electronic component, or an electromagnetic shielding material.

14. Use of the carbon fiber reinforced resin molded body according to claim 11 or 12 in an automobile, a sporting good, a nursing care product, a conductive electric/electronic component, or an electromagnetic shielding material.

## Patentansprüche

1. Kohlenstofffaservliesstoff, der diskontinuierliche Kohlenstofffasern umfasst,
wobei der Kohlenstofffaservliesstoff ein längliches, paralleles Netz ist, in dem zwei oder mehr rechteckige Fasernetze, die Kohlenstofffasern aufweisen, die im Wesentlichen in eine Richtung orientiert sind, in derselben Richtung gestapelt sind, wobei Endabschnitte der rechteckigen Fasernetze voneinander verschoben sind, und
die Kohlenstofffasern, die das längliche, parallele Netz ausbilden, in eine Richtung angeordnet sind,
und wobei unter "Kohlenstofffasern, die im Wesentlichen in eine Richtung orientiert sind" zu verstehen ist, dass 50 Masse-% oder mehr der Kohlenstofffasern in einem Winkel innerhalb von ± 10 Grad orientiert sind.

2. Kohlenstofffaservliesstoff nach Anspruch 1,
wobei der Kohlenstofffaservliesstoff die diskontinuierlichen Kohlenstofffasern in einer Menge von 10 Masse-% bis 100 Masse-% und andere Fasern als die Kohlenstofffasern in einer Menge von 0 Masse-% bis 90 Masse-%, bezogen auf die Menge des Kohlenstofffaservliesstoffs, enthält.

3. Kohlenstofffaservliesstoff nach Anspruch 1 oder 2,
wobei die Masse pro Einheitsfläche des Kohlenstofffaservliesstoffs 1 bis 1000 g/m² ist.

4. Kohlenstofffaservliesstoff nach Anspruch 1 oder 2,
wobei die Anzahl von gestapelten rechteckigen Fasernetzen 2 bis 100 ist.

5. Kohlenstofffaservliesstoff nach Anspruch 1 oder 2,
wobei Endabschnitte der rechteckigen Fasernetze gestapelt sind, während sie jeweils um 1 bis 1000 mm verschoben sind.

6. Kohlenstofffaservliesstoff nach Anspruch 1 oder 2,
wobei die rechteckigen Fasernetze eine durchschnittliche Dichte von 0,01 bis 0,40 g/cm³ aufweisen, wenn eine Last von 500 Pa aufgebracht ist.

7. Kohlenstofffaservliesstoff nach Anspruch 1 oder 2,
wobei die Kohlenstofffasern, die die rechteckigen Fasernetze ausbilden, eine Faserlänge im Bereich von 1 bis 300 mm aufweisen.

8. Kohlenstofffaservliesstoff nach Anspruch 1 oder 2,
wobei die rechteckigen Fasernetze jeweils eine Länge von 30 bis 5000 mm in eine Richtung aufweisen, in der die Kohlenstofffasern orientiert sind, und jeweils eine Länge von 20 bis 3000 mm in eine Richtung senkrecht zu der Richtung aufweisen, in der die Kohlenstofffasern orientiert sind.

9. Kohlenstofffaservliesstoff nach Anspruch 1 oder 2,
wobei die Kohlenstofffasern, die den Kohlenstofffaservliesstoff ausbilden, recycelte Kohlenstofffasern enthalten.

10. Verfahren zum Herstellen des Kohlenstofffaservliesstoffs nach einem der Ansprüche 1 bis 9, umfassend:
Bilden eines Fasernetzes durch Öffnen von Fasern, die diskontinuierliche Kohlenstofffasern enthalten, unter Verwendung einer Kardiermaschine, und Orientieren der Kohlenstofffasern im Wesentlichen in eine Richtung, und Bilden von rechteckigen Fasernetzen durch Schneiden des Fasernetzes in einer Breitenrichtung oder einer Schrägrichtung;
Bilden eines länglichen, parallelen Netzes durch Aufeinanderstapeln der rechteckigen Fasernetze, während Endabschnitte der rechteckigen Fasernetze voneinander verschoben sind und die Kohlenstofffasern in eine Richtung angeordnet sind; und
Erhalten eines Kohlenstofffaservliesstoffs durch Schneiden beider Enden des länglichen, parallelen Netzes,
und wobei unter "Orientieren der Kohlenstofffasern im Wesentlichen in eine Richtung" Orientieren von 50 Masse-% oder mehr der Kohlenstofffasern in einem Winkel innerhalb von ± 10 Grad zu verstehen ist.

11. Kohlenstofffaserverstärkter Harzformkörper, umfassend:
einen Kohlenstofffaservliesstoff; und
ein Matrixharz,
wobei der Kohlenstofffaservliesstoff der Kohlenstofffaservliesstoff nach einem der Ansprüche 1 bis 9 ist.

12. Kohlenstofffaserverstärkter Harzformkörper nach Anspruch 11,
wobei der kohlenstofffaserverstärkte Harzformkörper in der Richtung, in der die Kohlenstofffasern orientiert sind, eine Zugfestigkeit von 340 MPa oder mehr aufweist.

13. Verwendung des Kohlenstofffaservliesstoffs nach einem der Ansprüche 1 bis 9 in einem Kraftfahrzeug, einem Sportartikel, einem Pflegefürsorgeprodukt, einer leitfähigen elektrischen/elektronischen Komponente oder einem elektromagnetischen Abschirmungsmaterial.

14. Verwendung des kohlenstofffaserverstärkten Harzformkörpers nach Anspruch 11 oder 12 in einem Kraftfahrzeug, einem Sportartikel, einem Pflegefürsorgeprodukt, einer leitfähigen elektrischen/elektronischen Komponente oder einem elektromagnetischen Abschirmungsmaterial.

## Revendications

1. Feuille de tissu non-tissé de fibres de carbone comprenant des fibres de carbone discontinues,
dans laquelle la feuille de tissu non-tissé de fibres de carbone est une bande parallèle allongée dans laquelle deux bandes de fibres rectangulaires ou plus présentant des fibres de carbone orientées sensiblement dans une direction sont empilées dans la même direction avec des parties d'extrémité des bandes de fibres rectangulaires décalées les unes par rapport aux autres, et
les fibres de carbone qui constituent la bande parallèle allongée sont disposées dans une direction,
et dans laquelle, par « fibres de carbone orientées sensiblement dans une direction », on entend que 50 % en masse ou plus des fibres de carbone sont orientées selon un angle dans une plage de +/- 10 degrés.

2. Feuille de tissu non-tissé de fibres de carbone selon la revendication 1,
dans laquelle la feuille de tissu non-tissé de fibres de carbone contient les fibres de carbone discontinues en une quantité de 10 % en masse à 100 % en masse, et des fibres autres que les fibres de carbone en une quantité de 0 % en masse à 90 % en masse, par rapport à la quantité de la feuille de tissu non-tissé de fibres de carbone.

3. Feuille de tissu non-tissé de fibres de carbone selon la revendication 1 ou la revendication 2,
dans laquelle la masse surfacique de la feuille de tissu non-tissé de fibres de carbone est de 1 à 1 000 g/m².

4. Feuille de tissu non-tissé de fibres de carbone selon la revendication 1 ou la revendication 2,
dans laquelle le nombre de bandes de fibres rectangulaires empilées est de 2 à 100.

5. Feuille de tissu non-tissé de fibres de carbone selon la revendication 1 ou la revendication 2,
dans laquelle des parties d'extrémité des bandes de fibres rectangulaires sont empilées tout en étant chacune décalées de 1 à 1 000 mm.

6. Feuille de tissu non-tissé de fibres de carbone selon la revendication 1 ou la revendication 2,
dans laquelle les bandes de fibres rectangulaires présentent une densité moyenne de 0,01 à 0,40 g/cm³ lorsqu'une charge de 500 Pa est appliquée.

7. Feuille de tissu non-tissé de fibres de carbone selon la revendication 1 ou la revendication 2,
dans laquelle les fibres de carbone qui constituent les bandes de fibres rectangulaires présentent une longueur de fibre dans la plage de 1 à 300 mm.

8. Feuille de tissu non-tissé de fibres de carbone selon la revendication 1 ou la revendication 2,
dans laquelle les bandes de fibres rectangulaires présentent chacune une longueur de 30 à 5 000 mm dans une direction dans laquelle les fibres de carbone sont orientées, et présentent chacune une longueur de 20 à 3 000 mm dans une direction orthogonale à la direction dans laquelle les fibres de carbone sont orientées.

9. Feuille de tissu non-tissé de fibres de carbone selon la revendication 1 ou la revendication 2,
dans laquelle les fibres de carbone qui constituent la feuille de tissu non-tissé de fibres de carbone contiennent des fibres de carbone recyclées.

10. Procédé de production de la feuille de tissu non-tissé de fibres de carbone selon l'une quelconque des revendications 1 à 9, comprenant :
la formation d'une bande de fibres en ouvrant des fibres contenant des fibres de carbone discontinues à l'aide d'une cardeuse, et en orientant les fibres de carbone sensiblement dans une direction, et la formation de bandes de fibres rectangulaires en coupant la bande de fibres dans le sens de la largeur ou dans une direction oblique ;
la formation d'une bande parallèle allongée par empilement des bandes de fibres rectangulaires les unes sur les autres tandis que des parties d'extrémité des bandes de fibres rectangulaires sont décalées les unes par rapport aux autres et que les fibres de carbone sont disposées dans une direction ; et
l'obtention d'une feuille de tissu non-tissé de fibres de carbone en coupant les deux extrémités de la bande parallèle allongée,
et dans lequel, par « orienter les fibres de carbone sensiblement dans une direction », on entend orienter 50 % en masse ou plus des fibres de carbone selon un angle dans une plage de +/- 10 degrés.

11. Corps moulé en résine renforcée de fibres de carbone comprenant :
une feuille de tissu non-tissé de fibres de carbone ; et
une résine matricielle,
dans lequel la feuille de tissu non-tissé de fibres de carbone est la feuille de tissu non-tissé de fibres de carbone selon l'une quelconque des revendications 1 à 9.

12. Corps moulé en résine renforcée de fibres de carbone selon la revendication 11,
dans lequel le corps moulé en résine renforcée de fibres de carbone présente une résistance à la traction de 340 MPa ou plus dans la direction dans laquelle les fibres de carbone sont orientées.

13. Utilisation de la feuille de tissu non-tissé de fibres de carbone selon l'une quelconque des revendications 1 à 9 dans une automobile, un article de sport, un produit de soins infirmiers, un composant électrique/électronique conducteur ou un matériau de blindage électromagnétique.

14. Utilisation du corps moulé en résine renforcée de fibres de carbone selon la revendication 11 ou la revendication 12 dans une automobile, un article de sport, un produit de soins infirmiers, un composant électrique/électronique conducteur ou un matériau de blindage électromagnétique.
